# EUROPEAN PATENT APPLICATION

(11) **EP 3 413 059 A1**
(43) Date of publication of application: **12.12.2018**
(21) Application number: 18176129.7
(22) Date of filing: 05.06.2018
(51) Int. Cl.: G01P 5/165, G01F 1/46, B22D 19/00

(54) **CASTING METHOD FOR MANUFACTURING HYBRID MATERIAL PITOT TUBE**

(30) Priority: 09.06.2017 IN 201711020311
(71) Applicant: Simmonds Precision Products, Inc., Vergennes, VT 05491 (US)
(72) Inventor: JACOB, Robin, 560043 Karnataka (IN); MAHAPATRA, Guru Prasad, 560037 Karnataka (IN); JOHNSON, Paul Robert, Prior Lake, MN 55372 (US)
(74) Representative: Dehns

(57) **Abstract**

A pitot tube includes a substantially cylindrical body portion having an interior defining a flow passage. A tip portion extends along a pitot tube axis from the body portion. The tip portion includes a high thermal conductive insert. The body portion and the tip portion including the high thermal conductive insert are integrally formed.

## Description

### CROSS-REFERENCE TO RELATED APPLICATION

This application claims the benefit of the IN Application No. 201711020311 filed June 9, 2017, which is incorporated herein by reference in its entirety.

### BACKGROUND

The subject matter disclosed herein generally relates to pitot tubes. More specifically, the present disclosure relates to the formation of pitot tubes.

A pitot tube is widely used to determine airspeed of an aircraft or other vehicle, or to measure air or gas velocities in industrial applications. In particular, by measuring stagnation pressure of a fluid driven into the pitot tube, together with a measured static pressure, the airspeed of the aircraft can be determined. In certain flight conditions, the pitot tube may be subject to ice accumulation from moisture in the air. For this reason, pitot tubes are equipped with heating elements to prevent such ice accumulation. Further, in other conditions, the pitot tube may ingest ice crystals which then accumulate inside of the pitot tube and cause failure in its operation.

A typical pitot tube is substantially cylindrical with an internal diameter containing the heating elements, or coils. Forward of the heating elements is a tip portion that extends radially from forward tip portion to an outer diameter of the pitot tube. An exterior of the typical tube is cylindrical along its length to the inlet. Such a tube has a large surface area of material in the tip portion forward of the heater, and is difficult to heat effectively and therefore to prevent ice accumulation thereon. Further, a large inlet diameter allows for proportionally more ice crystals to be ingested by the pitot tube. Such ingested ice crystals must be melted by the heating elements and drained from the pitot tube.

### BRIEF DESCRIPTION

According to one aspect of an exemplary embodiment, a pitot tube includes a substantially cylindrical body portion having an interior defining a flow passage. A tip portion extends along a pitot tube axis from the body portion. The tip portion includes a high thermal conductive insert. The body portion and the tip portion including the high thermal conductive insert are integrally formed.

In addition to one or more of the features described above, or as an alternative, in further embodiments the high thermal conductive insert is formed of graphite or carbon graphite.

In addition to one or more of the features described above, or as an alternative, in further embodiments the high thermal conductive insert is formed of annealed pyrolytic graphite.

In addition to one or more of the features described above, or as an alternative, in further embodiments the high thermal conductive insert is formed from a first material having a first melting temperature and the cylindrical body portion is formed from a second material having a second melting temperature, the first melting temperature being higher than the second melting temperature.

In addition to one or more of the features described above, or as an alternative, in further embodiments the body portion is formed of nickel.

According to another aspect of an exemplary embodiment, a method of forming a hybrid pitot tube includes positioning a high thermal conductive insert within a mold and injecting a flowable material into the mold. The flowable material when cooled forms a core element extending at least partially into the high thermal conductive insert. The method further includes forming a secondary element about the mold. During formation of the secondary element, the core element is eliminated. A continuous cast body is formed about the high thermal conductive insert. The continuous cast body is formed from a first material and the high thermal conductive insert is formed from a second material. The continuous cast body is formed into a pitot tube.

In addition to one or more of the features described above, or as an alternative, in further embodiments the high thermal conductive insert includes a cavity and positioning the high thermal conductive insert within the mold further comprises mounting a member extending from the mold within the cavity.

In addition to one or more of the features described above, or as an alternative, in further embodiments the flowable material injected into the mold is a molten wax.

In addition to one or more of the features described above, or as an alternative, in further embodiments forming a secondary element about the mold further comprises: removing the high thermal conductive insert and the core element from the mold; dipping the high thermal conductive insert and the core element into a slurry; and curing the slurry.

In addition to one or more of the features described above, or as an alternative, in further embodiments curing the slurry causes the core element to melt and separate from the slurry and the high thermal conductive insert.

In addition to one or more of the features described above, or as an alternative, in further embodiments the secondary element comprises a ceramic material.

In addition to one or more of the features described above, or as an alternative, in further embodiments forming a continuous cast body about the high thermal conductive insert, further comprises:installing the high thermal conductive element and the secondary element into another mold; pouring a molten metal material into a hollow interior of the secondary element; and removing the secondary element after the molten metal material has cooled and solidified.

In addition to one or more of the features described above, or as an alternative, in further embodiments forming a continuous cast body about the high thermal conductive insert, further comprises: pouring additional molten metal material into the hollow interior of the secondary element, wherein the additional molten metal material adjoins the cooled and solidified molten metal material to form a continuous cast body.

In addition to one or more of the features described above, or as an alternative, in further embodiments the high thermally conductive tip insert is encapsulated within the continuous cast body.

In addition to one or more of the features described above, or as an alternative, in further embodiments the high thermal conductive insert is formed of graphite or carbon graphite.

In addition to one or more of the features described above, or as an alternative, in further embodiments the high thermal conductive insert is formed of annealed pyrolytic graphite.

In addition to one or more of the features described above, or as an alternative, in further embodiments the continuous cast body is formed of nickel.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a side view of an example of a pitot tube;
FIG. 2 is a cross-sectional view of a pitot tube include a high thermal conductive insert according to an embodiment;
FIG. 3 is a cross-sectional view of a mold for forming a hybrid pitot tube according to an embodiment;
FIG. 4 is a cross-sectional view of a mold including a core element for forming a hybrid pitot tube according to an embodiment;
FIG. 5 is a cross-sectional view of a preform for forming a hybrid pitot tube according to an embodiment;
FIG. 6 is a cross-sectional view of a preform including a secondary material for forming a hybrid pitot tube according to an embodiment;
FIG. 7 is a cross-sectional view of a preform including a cured secondary material for forming a hybrid pitot tube according to an embodiment;
FIG. 8 is a cross-sectional view of an insert and a secondary material during application of a first stage of molten metal material for forming a hybrid pitot tube according to an embodiment;
FIG. 9 is a cross-sectional view of the component of FIG. 8 after having removed the secondary material according to an embodiment; and
FIG. 10 is a cross-sectional view of an insert and a secondary material during application of a second stage of molten metal material for forming a hybrid pitot tube according to an embodiment.

The detailed description explains embodiments of the disclosure, together with advantages and features, by way of example with reference to the drawings.

### DETAILED DESCRIPTION

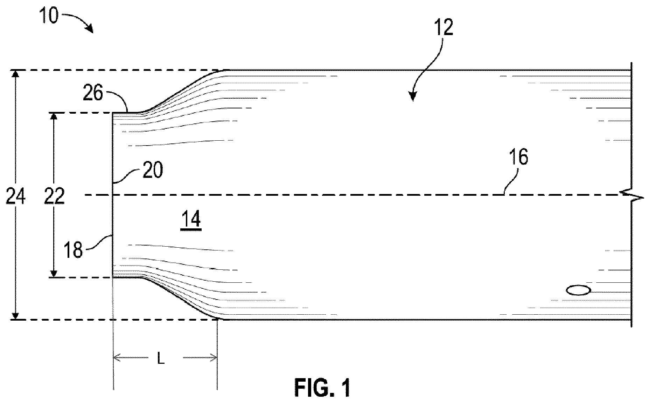

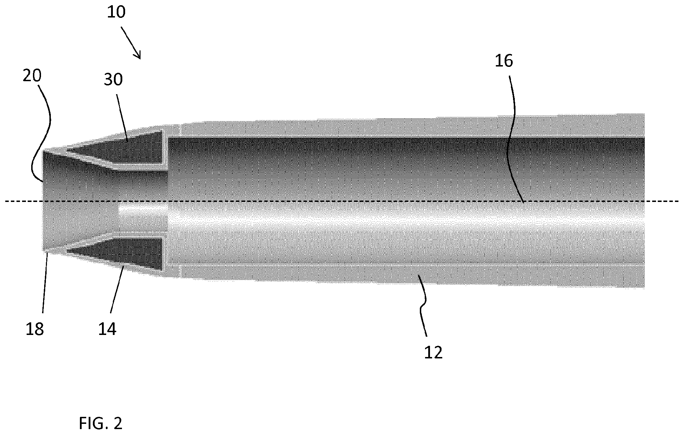

With reference now to FIGS. 1 and 2, various embodiments of a pitot tube 10 are illustrated. The pitot tube 10 includes a generally cylindrical body portion 12 and a tip portion 14 extending along a tube axis 16 from the body portion 12 toward a tube inlet 18. In the embodiment of FIG. 1, the tip portion 14 includes an inlet opening 20 having an inlet diameter 22 smaller than a body diameter 24 of the body portion 12. The tip portion 14, between the body portion 12 and the inlet opening 20, tapers in diameter along a concave curve 26. In some embodiments, the concave curve 26 does not extend entirely to the inlet opening 20 as the inlet diameter 22 extends axially from the inlet opening 20 to the concave curve 26. It shall be understood that the curve 26 may be straight or a profile that is aerodynamically suitable in one embodiment. As shown, the tip portion 14 has a tip length L.

In an embodiment, the pitot tube 10 has a hybrid construction of multiple materials. For example, the body 12 of the pitot tube 10 may be formed from a first material and the tip portion 14 of the pitot tube 10 may be formed from or may include a second material. The first and second materials may be coupled together, or alternatively may be integrally formed during manufacturing of the pitot tube 10. In an embodiment, the second material is provided in the form of an insert 30, best shown in FIG. 2, and is surrounded by the first material within the tip portion 14. The second material may have an enhanced heat transfer capability compared to the first material. In an embodiment, the second material is formed from graphite or carbon graphite, such as annealed pyrolytic graphite for example. However, other suitable materials having a thermal conductivity and melting point greater than that of the first material are within the scope of the disclosure.

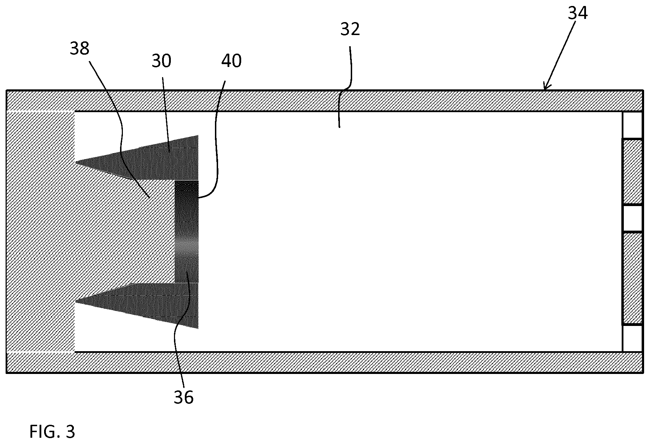

FIGS. 3-10 illustrate a method for forming a pitot tube 10 including a high thermally conductive tip insert 30. As shown in the FIGS., the tip insert 30 formed from a high thermally conductive material in installed within a hollow interior 32 of a mold 34 for integration with the body 12 of a pitot tube 10. The mold 34 may be a permanent mold, or a temporary mold, formed from any suitable material, such as sand or steel for example. As shown, the tip insert 30 generally includes a through bore 36 extending from a first end thereof to a second, opposite end thereof. In an embodiment, the mold 34 includes a member 38 having a contour substantially complementary to the interior of the bore 36. The member 38 is receivable within the bore 36, as shown in FIG. 3, and is operable to retain the insert 30 at a desired position within the mold 34. In an embodiment, as shown in the FIGS., the member 38 is shorter than the bore 36 such that the member does not extend to the distal end 40 of the insert 30.

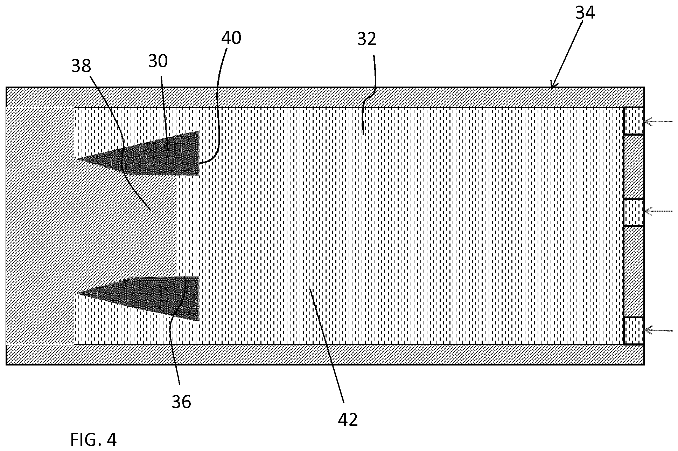

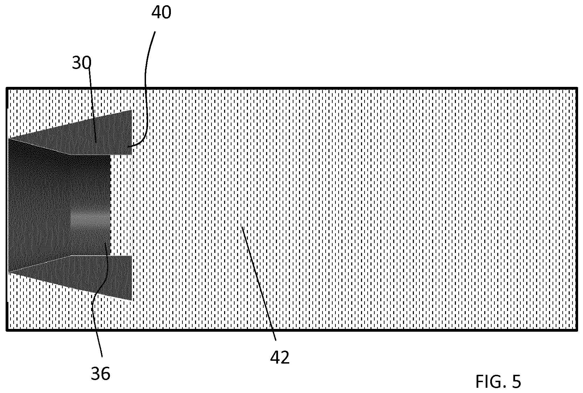

Once the insert 30 is installed within the mold 34, the cavity 32 of the mold 34 is filled with a core material 42, such as a molten wax for example (see FIG. 4). Due to the flowable nature of the core material 42 when heated, the core material is configured to fill the mold cavity 32 and the portion of the bore 36 extending between the member 38 and the second end 40 of the insert 30. Once the core material 42 has cooled and solidified, the cool core material 42 and the insert 30, referred to collectively herein as a "preform", are removed from the mold 34, as shown in FIG. 5.

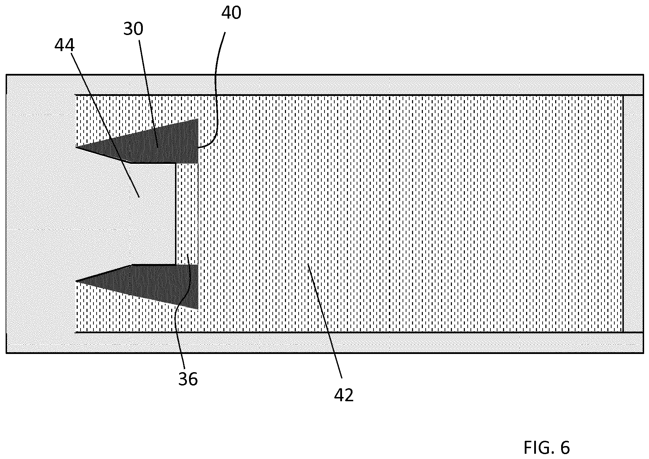

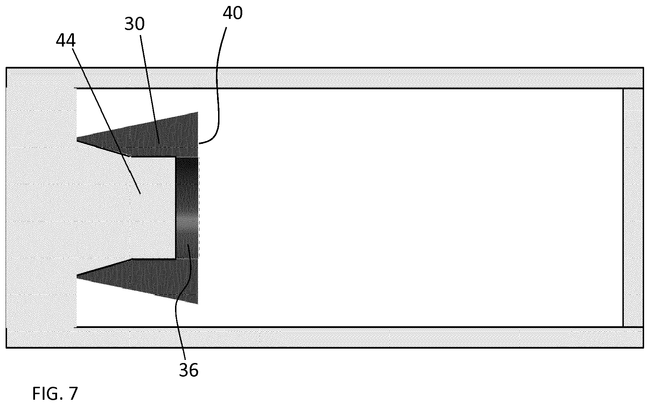

The preform is then dipped into a secondary material. The core material 42 acts as a base to support the secondary material. A coating of the secondary material 44, best shown in FIG. 6, is formed during a shelling process by coating the preform with a slurry comprising particles of one or more sizes. In an embodiment, the material of the slurry may be substantially identical to the mold 34 such as ceramic for example. During application of the slurry of secondary material 44, the slurry is configured to encapsulate the core material 42 and flow within the portion of the bore 36 absent the core material 42. In an embodiment, the portion of the insert 30 coated with secondary material 44 is the same portion of the insert 30 previously engaged with the member 38. After dipping the preform into the secondary material 44, the secondary material 44 is hardened, such as by firing the preform in an oven or kiln for example (see FIG. 7). The application of heat causes the core material 42 to melt and the secondary material 44 to strengthen and solidify into a cured, rigid element. The melted core material 42 is then removed.

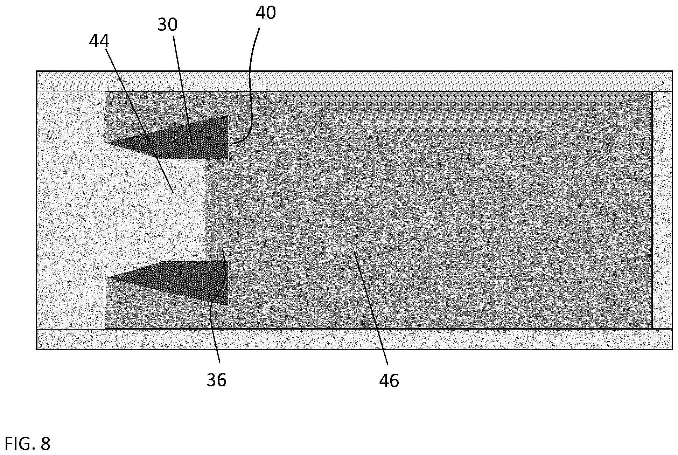

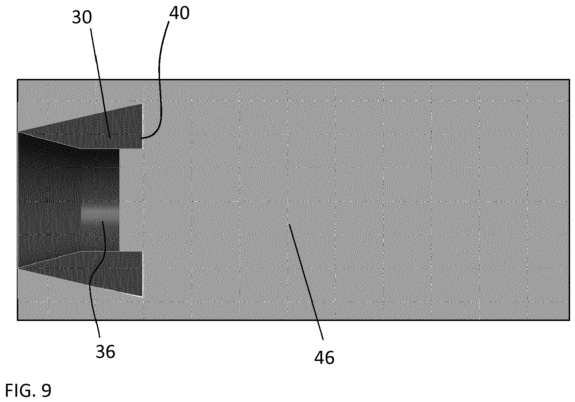

A molten metal material 46 is poured into the hollow interior defined by the secondary material 44. The molten material 46 is configured to fill the void left by melting the core element 42. In the illustrated, non-limiting embodiment, the metal 46 is added in two stages. However, embodiments where the metal is added during a single stage are also contemplated herein. With reference to FIG. 8, the temperature of the insert 30 and secondary element 44 is increased to a temperature generally equal to the melting point of the molten metal material, such as about 2800°F when the metal material is a nickel alloy for example, and a first stage of molten metal material 46 is added thereto. It should be noted that the melting point of the material of the insert 30 must be greater than the melting point of the molten metal material 46. Once the molten metal material has cooled and solidified, the secondary material 44 is broken and removed from adjacent the insert 30 and the metal 46. An example of the insert and metal material after the secondary element 44 has been removed is illustrated in FIG. 9.

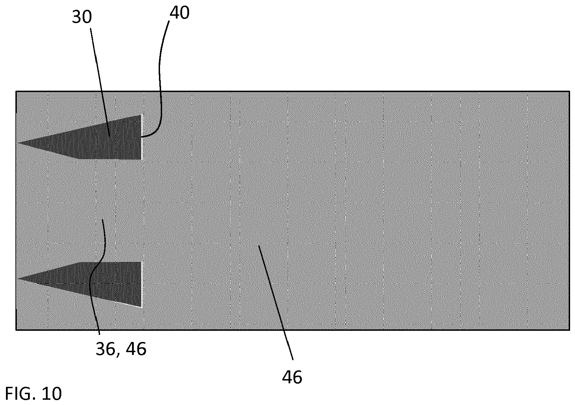

The first application or stage of molten metal material 46 forms the cylindrical body 12 and an exterior of the tip end 14 of the pitot tube 10. Additional molten metal material may then be applied, such as during a second stage as shown in FIG. 10 for example, to fill the unfilled portion, and in particular, the bore 36 formed in the high thermally conductive tip insert 30. As a result, the molten metal material 46 from the second stage adjoins the metal material 46 from the first stage to form a continuous cast body having a high thermally conductive tip insert 30 encapsulated therein. After the metal 46 has cooled and solidified, the cast material is machined and finished to form a pitot tube 10 as shown in FIG. 2. In an embodiment, the machining is configured to achieve desired dimensions and to form a bore extending through the pitot tube 10. Similarly, the finishing described herein may include polishing an exterior and/or interior surface of the formed pitot tube 10.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A pitot tube comprising:
a substantially cylindrical body portion having an interior defining a flow passage; and
a tip portion extending along a pitot tube axis from the body portion, the tip portion including a high thermal conductive insert, wherein the body portion and the tip portion including the high thermal conductive insert are integrally formed.

2. The pitot tube of claim 1, wherein the high thermal conductive insert is formed of graphite or carbon graphite.

3. The pitot tube of claim 1 or 2, wherein the high thermal conductive insert is formed of annealed pyrolytic graphite.

4. The pitot tube of claim 1, 2 or 3, wherein the high thermal conductive insert is formed from a first material having a first melting temperature and the cylindrical body portion is formed from a second material having a second melting temperature, the first melting temperature being higher than the second melting temperature.

5. The pitot tube of any preceding claim, wherein the body portion is formed of nickel.

6. A method of forming a hybrid pitot tube, comprising:
positioning a high thermal conductive insert within a mold;
injecting a flowable material into the mold, wherein the flowable material when cooled forms a core element, the core element extending at least partially into the high thermal conductive insert;
forming a secondary element about the mold, wherein during formation of the secondary element, the core element is eliminated;
forming a continuous cast body about the high thermal conductive insert, wherein the continuous cast body is formed from a first material and the high thermal conductive insert is formed from a second material; and
forming the continuous cast body into a pitot tube.

7. The method of claim 6, wherein the high thermal conductive insert includes a cavity and positioning the high thermal conductive insert within the mold further comprises mounting a member extending from the mold within the cavity.

8. The method of claim 6 or 7, wherein the flowable material injected into the mold is a molten wax.

9. The method of claim 6, 7 or 8, wherein forming a secondary element about the mold further comprises:
removing the high thermal conductive insert and the core element from the mold;
dipping the high thermal conductive insert and the core element into a slurry; and
curing the slurry.

10. The method of claim 9, wherein curing the slurry causes the core element to melt and separate from the slurry and the high thermal conductive insert.

11. The method of any one of claims 6-10, wherein the secondary element comprises a ceramic material.

12. The method of any one of claims 6-11, wherein forming a continuous cast body about the high thermal conductive insert, further comprises:
installing the high thermal conductive element and the secondary element into another mold;
pouring a molten metal material into a hollow interior of the secondary element; and
removing the secondary element after the molten metal material has cooled and solidified.

13. The method of claim 12, wherein forming a continuous cast body about the high thermal conductive insert, further comprises:
pouring additional molten metal material into the hollow interior of the secondary element, wherein the additional molten metal material adjoins the cooled and solidified molten metal material to form a continuous cast body.

14. The method of any one of claims 6-13, wherein the high thermal conductive insert is formed of graphite or carbon graphite.

15. The method of any one of claim 6-14, wherein the continuous cast body is formed of nickel.
